# EUROPÄISCHE PATENTSCHRIFT

(11) **EP 4 488 170 B1**
(45) Veröffentlichungstag und Bekanntmachung des Hinweises auf die Patenterteilung: **26.11.2025**
(21) Anmeldenummer: 24184564.3
(22) Anmeldetag: 26.06.2024
(51) Int. Cl.: B64C 9/16, B64C 9/38, B64D 31/00

(54) **ANFLUGVERFAHREN MIT VERTEILTEN ANTRIEBEN**
LANDING APPROACH METHOD WITH DISTRIBUTED PROPULSION UNITS
AMORCE D'ATTERRISSAGE AVEC PROPULSEURS RÉPARTIS

(30) Priorität: 07.07.2023 DE 102023118008
(43) Veröffentlichungstag der Anmeldung: 08.01.2025
(73) Patentinhaber: Deutsches Zentrum für Luft- und Raumfahrt e.V., 53227 Bonn (DE)
(72) Erfinder: Keller, Dennis, 38108 Braunschweig (DE); Atanasov, Georgi, 21129 Hamburg (DE)
(74) Vertreter: REHBERG HÜPPE + PARTNER

(56) Entgegenhaltungen:
- WO-A1-2023/034302
- CN-A- 112 678 149
- DE-T5- 112020 004 729
- US-B2- 10 099 793

## Beschreibung

### TECHNISCHES GEBIET DER ERFINDUNG

Die Erfindung bezieht sich auf ein Verfahren zum Fliegen eines Flugzeugs mit einem zwei Halbflügel aufweisenden Tragflügel und mindestens drei an einer Flügelvorderkante jedes der Halbflügel nebeneinander angeordneten Propellerantrieben, deren Propeller um Propellerachsen umlaufen und deren Propellernachläufe den jeweiligen Halbflügel anblasen. Insbesondere bezieht sich die Erfindung auf ein Verfahren mit den Merkmalen des Oberbegriffs des unabhängigen Patentanspruchs 1. Weiterhin bezieht sich die Erfindung auf ein entsprechendes Flugzeug mit einer Steuerung zur Umsetzung des Verfahrens.

### STAND DER TECHNIK

Die Elektrifizierung des Antriebs von Flugzeugen führt zu neuen Möglichkeiten bei der Aufteilung und Platzierung von Antriebsaggregaten. Hierzu zählt die Verteilung mehrerer Propellerantriebe entlang der Flügelvorderkanten, durch die ein größerer Teil der Halbflügel mit den Propellernachläufen angeblasen wird. Durch derartige verteilte Antriebe (englisch: "distributed propulsion") wird der Flügelauftrieb im Flug mit niedriger Fluggeschwindigkeit deutlich erhöht. Beim Starten, wenn ein großer Schub benötigt wird, ist dieser Effekt günstig. Beim Landen, wenn der benötigte Schub gewöhnlich geringer ist, reduziert sich das Potential der Auftriebssteigung mit dem Schubbedarf.

Für eine besonders große Auftriebserhöhung durch Anblasen der Halbflügel hat die NASA das Konzept der sogenannten Hochauftriebspropeller (englisch: "high-lift propeller") entwickelt, siehe Nicholas K. Borer et al.: Design and Performance of the NASA SCEPTOR Distributed Electric Propulsion Flight Demonstrator, American Institut of Aeronautics and Astronautics (AIAA), 2019, https://ntrs.nasa.gov/search.jsp?R=20160010157. Gemäß diesem Konzept werden konventionelle Propeller an den Flügelspitzen installiert, die ausschließlich zur Schuberzeugung dienen.

Zusätzlich werden Hochauftriebspropeller entlang der Flügelvorderkanten installiert, die vornehmlich zur Erhöhung des Auftriebs im langsamen Flug verwendet werden. Die Propellerblätter der Hochauftriebspropeller sind derart ausgelegt, dass sie eine starke Auftriebserhöhung des stromab angeordneten Halbflügels bewirken, jedoch verhältnismäßig wenig Schub erzeugen. Im Reiseflug werden die Propellerblätter der Hochauftriebspropeller eingeklappt und nur noch die konventionellen Propeller angetrieben. Beim Landen können die konventionellen Propeller im sogenannten Windmühlen (englisch: "windmilling")-Betrieb zur Widerstandserhöhung genutzt werden, damit die Hochauftriebspropeller bei gleichem effektivem Gesamtschub mehr Auftrieb erzeugen können.

Aus der US 9 751 614 B1 ist ein Verfahren zum Verändern der Flugdynamik während des Flugs eines Flugzeugs bekannt. Das Flugzeug weist einen verteilten Antrieb mit mehreren unterhalb der beiden Halbflügel seines Tragflügels angeordneten Strahltriebwerken auf. Durch Betreiben der Strahltriebwerke mit unterschiedlichem Schub werden die Halbflügel gezielt um ihre Spannweitenrichtung verdrillt. Dabei wird insbesondere mit den weiter außen liegenden Strahltriebwerken mehr Schub erzeugt als mit den weiter innenliegenden Strahltriebwerken.

Aus der DE 11 2020 004 729 T5 sind ein Elektroflugzeug und ein Verfahren zum Steuern seiner aerodynamischen Leistung bekannt. Das Elektroflugzeug weist mehrere längs der Flügelvorderkannten seiner Halbflügel angeordnete Propellerantriebe auf, die zum Auftrieb der Halbflügel beitragen. Primäre Propellerschübe der einzelnen Propellerantriebe werden abhängig von einer an der Tragfläche erzeugten aerodynamischen Kraft derart einstellt, dass ein auf das gesamte Elektroflugzeug wirkender effektiver Gesamtschub oder die aerodynamische Kraft einen vorgegebenen Wert hat oder innerhalb eines vorgegebenen Bereichs liegt. Dabei kann der mit einzelnen der Propellerantriebe erzeugte primäre Propellerschub auch auf einen negativen Wert eingestellt werden. Durch Einstellung des primären Propellerschubs der einzelnen Propellerantriebe wird eine gewünschte Auftriebsverteilung eingestellt. Dabei kann der Auftrieb so über die Halbflügel verteilt werden, dass er zu den Flügelspitzen hin abnimmt und so das auf die Halbflügel einwirkende Biegemoment reduziert wird.

Die DE 20 2016 000 269 U1 offenbart ein Flugzeug mit einem Tragflügel auf jeder Flugzeugseite, der mindestens eine Einströmöffnung entlang seiner Vorderkante und mindestens eine Ausströmöffnung entlang seiner Hinterkante aufweist. Im Inneren des Tragflügels befinden sich nebeneinander angeordnete Gebläseeinheiten, die jeweils einer Einström- und einer Ausströmöffnung zugeordnet sind.

Die WO 2023/ 034 302 A1 offenbart ein System und ein Verfahren zur Auftriebserhöhung eines Flugzeugflügels mit einer Vorderkante und einer Hinterkante. Mit dem Flugzeugflügel sind eine Vielzahl von schuberzeugenden Vorrichtungen verbunden. Sie weisen eine Klappe auf, die mit einem inneren Abschnitt des Flugzeugflügels in der Nähe der Hinterkante verbunden ist, sowie eine Flugzeug-Rollsteuervorrichtung, die mit dem Flugzeugflügel verbunden ist. Die schuberzeugenden Vorrichtungen haben jeweils einen Nachlauf und eine Klappe, die so angepasst werden kann, dass sie von einer Kante des Flugzeugflügels abknickt.

Die EP 3 093 235 A1 offenbart ein Flugzeug, welches Hinterkantenklappen und ein am Flügel montiertes Vortriebselement aufweist. Das Vortriebselement ist so angeordnet, dass sich die Klappen an dem Flügel in einem Nachlauf des Vortriebselements befinden, wenn diese ausgefahren sind. Das Flugzeug umfasst ferner ein schubvektorgesteuertes Vortriebselement, das so konfiguriert ist, dass es den Abgasausstoßvektor des Vortriebselements in mindestens einer Ebene selektiv verändert. Der schubvektorielle Antrieb weist ein Triebwerk auf, das zwischen zwei Modi überführbar ist, einem ersten Modus, in dem das Triebwerk einen Netto-Vorwärtsschub für das Flugzeug bereitstellt, und einem zweiten Modus, in dem das Triebwerk einen Netto-Widerstand für das Flugzeug bereitstellt. Das Triebwerk ist so positioniert, dass es einen Grenzschicht-Luftstrom ansaugt, wenn es in dem ersten Modus arbeitet.

Die US 2020 / 0 407 060 A1 offenbart Flugzeugkonstruktionen, insbesondere mit Tandemflügeln und einem verteilten Antriebssystem. In einer Ausführungsform umfassen die Tandemflügel einen ersten und einen zweiten Flügelsatz, die jeweils eine Flügelspannweite mit einer Reihe von Schubdüsen aufweisen.

Die CN 112678149 A offenbart ein Flugzeug, bei dem die Landestrecke infolge einer Erhöhung des induzierten Widerstands durch eine nicht-elliptische Auftriebsverteilung verkürzt wird. Diese nicht-elliptische Auftriebsverteilung wird durch die selektive Anströmung des Flügels mittels geänderter Schubwerte der Propellertriebwerke erreicht.

### AUFGABE DER ERFINDUNG

Der Erfindung liegt die Aufgabe zugrunde, ein einfach umsetzbares, aber effektives Verfahren zum Fliegen eines Flugzeugs mit mehreren an einer Flügelvorderkante jedes seiner Halbflügel nebeneinander angeordneten Propellerantrieben, deren Propeller um Propellerachsen umlaufen und deren Propellernachläufe den Halbflügel anblasen, aufzuzeigen, welches ausreichend Auftrieb auch beim Landen des Flugzeugs mit sehr niedriger Fluggeschwindigkeit sicherstellt.

### LÖSUNG

Die Aufgabe der Erfindung wird durch ein Verfahren mit den Merkmalen des unabhängigen Patentanspruchs 1 und durch ein Flugzeug mit den Merkmalen des unabhängigen Patentanspruch 9 gelöst. Die abhängigen Patentansprüche sind auf bevorzugte Ausführungsformen des erfindungsgemäßen Verfahrens und des erfindungsgemäßen Flugzeugs gerichtet.

### BESCHREIBUNG DER ERFINDUNG

Bei einem erfindungsgemäßen Verfahren zum Fliegen eines Flugzeugs mit einem zwei Halbflügel aufweisenden Tragflügel, mindestens drei an einer Flügelvorderkante jedes der Halbflügel nebeneinander angeordneten Propellerantrieben, deren Propeller um zumindest im Wesentlichen parallel zueinander ausgerichtete Propellerachsen umlaufen und deren Propellernachläufe den jeweiligen Halbflügel anblasen, und mindestens einer an einer Flügelhinterkante jedes der Halbflügel angeordneten Landeklappe werden die Landeklappen beim Landen des Flugzeugs ausgefahren und wird mit mindestens einem der Propellerantriebe, der an dem jeweiligen Halbflügel vor der ausgefahrenen Landeklappe angeordnet ist, ein um mindestens 15 %, vorzugsweise um mindestens 25 % und am meisten bevorzugt um mindestens 35 % größerer primärer Propellerschub in Vorwärtsrichtung seiner Propellerachse erzeugt wird als mit mindestens einem der Propellerantriebe, der an dem jeweiligen Halbflügel nicht vor der ausgefahrenen Landeklappe angeordnet ist.

Dem erfindungsgemäßen Verfahren liegt die Idee zugrunde, das Flugzeug ausschließlich mit gleichen Propellerantrieben auszustatten, wobei die Drehrichtungen aller Propeller oder zumindest aller Propeller an jedem Halbflügel um ihre Propellerachsen gleich sein können, aber nicht gleich sein müssen. Auch eine spiegelbildliche Verteilung der Drehrichtungen der Propeller an den beiden Halbflügeln ist möglich, aber nicht zwingend. Um die Auftriebssteigerung durch die Propellernachläufe beim Landen des Flugzeugs dennoch von dem auf das Flugzeug wirkenden Gesamtschub zu entkoppeln, werden mit Propellerantrieben, die beim Landen vor den ausgefahrenen Landeklappen angeordnet sind, deutlich größere primäre Propellerschübe in Vorwärtsrichtung ihrer Propellerachsen erzeugt als mit nicht vor den ausgefahrenen Landeklappen angeordneten Propellerantrieben. Dabei ist unter dem primären Propellerschub des jeweiligen Propellerantriebs in Vorwärtsrichtung seiner Propellerachse der Schub zu verstehen, mit dem der Propeller des jeweiligen Propellerantriebs den Halbflügel in Richtung der Propellerachse nach vorne zieht. Bezogen auf ihre primären Propellerschübe erzielen die vor den ausgefahrenen Landeklappen angeordneten Propellerantriebe eine größere Auftriebserhöhung und eine kleinere Erhöhung des auf das gesamte Flugzeug längs der Propellerachsen wirkenden effektiven Gesamtschubs in Vorwärtsrichtung als die nicht vor den ausgefahrenen Landeklappen angeordneten Propellerantriebe. Der dabei betrachtete effektive Gesamtschub ist die Summe aller primären Propellerschübe, Widerstände, einschließlich der durch die Propellernachläufe induzierten Widerstände, und weiteren auf das Flugzeug längs der Propellerachsen wirkenden Kräfte. Die vergleichsweise große Auftriebserhöhung bei vergleichsweise kleiner Erhöhung des Gesamtschubs in Vorwärtsrichtung tritt insbesondere auf, wenn die nicht vor den ausgefahrenen Landeklappen angeordneten Propellerantriebe weiter außen an den Halbflügeln angeordnet sind. Wenn der im Landeanflug benötigte kleine effektive Gesamtschub primär von den Propellerantrieben vor den ausgefahrenen Landeklappen erzeugt wird, kann daher eine viel größere Auftriebserhöhung realisiert werden, als wenn derselbe effektive Gesamtschub mit den nicht vor den ausgefahrenen Landeklappen angeordneten Propellerantrieben erzeugt würde. Am größten ist das Potential der Auftriebserhöhung mit geringer Erhöhung des effektiven Gesamtschubs vor den ausgefahrenen Landeklappen im Flügelinnenbereich. Dies kann bei dem erfindungsgemäßen Verfahren ausgenutzt werden, indem beim Landen mit einem der Propellerantriebe, der an dem jeweiligen Halbflügel vor der ausgefahrenen Landeklappe weiter innen angeordnet ist, ein vorzugsweise um mindestens 10 % größerer primärer Propellerschub in Vorwärtsrichtung seiner Propellerachse erzeugt wird als mit einem der Propellerantriebe, der an dem jeweiligen Halbflügel vor der ausgefahrenen Landeklappe weiter außen angeordnet ist. Beim Starten oder im Reiseflug des Flugzeugs kann die Verteilung der primären Propellerschübe der Propellerantriebe in den Vorwärtsrichtungen ihrer Propellerachsen so verändert werden, dass der benötigte Auftrieb zusammen mit einem höheren effektiven Gesamtschub für das Flugzeug erzeugt wird. Dazu kann mit den vor den ausgefahrenen Landeklappen angeordneten Propellerantrieben weniger und mit den nicht vor den ausgefahrenen Landeklappen angeordneten Propellerantrieben mehr primärer Propellerschub erzeugt werden als beim Landen. Das Verhältnis von Auftriebserhöhung durch die Propellernachläufe zu dem effektiven Gesamtschub aller Propellerantriebe, der auf das Flugzeug als Ganzes wirkt, kann dabei stufenlos variiert werden.

Das Verhältnis zwischen primärem Propellerschub eines der Propellerantriebe in Vorwärtsrichtung seiner Propellerachse zu dem auf das Flugzeug wirkenden effektiven Gesamtschub einerseits und der mit Hilfe des Propellernachlaufs hervorgerufenen Auftriebserhöhung andererseits wird neben der Lage des Propellerantriebs vor oder neben den ausgefahrenen Landeklappen sowie der Lage des Propellerantriebs im Flügelinnenbereich oder Flügelaußenbereich auch erheblich dadurch beeinflusst, ob der Propellerantrieb vor einem ausgelenkten Querruder an der Hinterkante des jeweiligen Tragflügels angeordnet ist oder auch neben einem solchen ausgelenkten Querruder. So können beispielsweise zwei symmetrisch angeordnete Querruder an den beiden Halbflügeln beim Landen gleichsinnig nach unten ausgelenkt werden, und mit mindestens einem der Propellerantriebe, der an dem jeweiligen Halbflügel vor dem ausgelenkten Querruder angeordnet ist, kann ein um vorzugsweise mindestens 10 % größerer primärer Propellerschub in Vorwärtsrichtung seiner Propellerachse erzeugt werden als mit mindestens einem der Propellerantriebe, der an dem jeweiligen Halbflügel weder vor dem ausgelenkten Querruder noch vor einer ausgefahrenen Landeklappe angeordnet ist. Auch auf diese Weise wird bezogen auf den Beitrag zum effektiven Gesamtschub eine größere Auftriebserhöhung erreicht. Allerdings ist der Effekt nicht so groß wie bei einem Propellerantrieb vor einer ausgefahrenen Landeklappe im Innenbereich des Flügels.

Es ist von grundsätzlichem Vorteil, wenn beim Landen mit allen vor den ausgefahrenen Landeklappen oder ausgelenkten Querrudern angeordneten Propellerantrieben um vorzugsweise mindestens 15 % größere primäre Propellerschübe in Vorwärtsrichtung ihrer Propellerachsen erzeugt werden als mit allen nicht vor den ausgefahrenen Landeklappen oder den ausgelenkten Querrudern angeordneten Propellerantrieben.

Grundsätzlich können die Querruder bei dem erfindungsgemäßen Verfahren auch gleichsinnig nach oben ausgelenkt werden. Dabei können die vor ihnen angeordneten Propellerantriebe zur Erzeugung von primären Propellerschüben in Vorwärtsrichtung, aber auch zur Erzeugung von negativen Propellerschüben, d. h. von Propellerschüben in Rückwärtsrichtung ihrer Propellerachsen angesteuert werden. Dadurch kann zum Beispiel die Erzeugung des Auftriebs auf die Innenbereiche der Halbflügel konzentriert und damit die effektive Spannweite des Flugzeugs verringert werden.

Der primäre Propellerschub in Vorwärtsrichtung der Propellerachse kann durch Ändern der Drehzahl des jeweiligen Propellerantriebs und/oder Ändern des Propellerblattanstellwinkels des jeweiligen Propellerantriebs variiert werden. Dabei ist die Beziehung zwischen der Antriebsleistung, mit der der Propellerantrieb betrieben wird, und dem dabei erzeugten primären Propellerschub nicht linear. So kann mit den Propellerantrieben, mit denen weniger primärer Propellerschub erzeugt wird, der Drall der Propellernachläufe derart variiert werden, dass sich in ein erhöhter induzierter Widerstand des Flugzeugs ergibt. Dieser induzierte Widerstand kann im Falle von Auftriebsbedarf mittels Vergrößerung solcher primären Propellerschübe ausgeglichen werden, die eine besonders große Auftriebserhöhung zur Folge haben. So können insbesondere die Propellerantriebe, mit denen beim Landen größere primäre Propellerschübe erzeugt werden, mit einer größeren, gleich großen oder kleineren Antriebsleistung betrieben werden als/wie diejenigen der Propellerantriebe, mit denen kleinere primäre Propellerschübe in den Vorwärtsrichtungen ihrer Propellerachsen erzeugt werden. Auch die Drehzahlen der Propellerantriebe, mit denen beim Landen größere primäre Propellerschübe erzeugt werden, können größer, gleich groß oder kleiner als/wie die Drehzahlen der Propellerantriebe sein, mit denen kleinere primäre Propellerschübe in den Vorwärtsrichtungen ihrer Propellerachsen erzeugt werden.

Im Extremfall wird beim Landen mit mindestens einem der Propellerantriebe an jedem Halbflügel ein besonders kleiner primärer Propellerschub in der Vorwärtsrichtung seiner Propellerachsen erzeugt, indem mit ihm ein negativer primärer Propellerschub in der Vorwärtsrichtung seiner Propellerachse erzeugt wird, das heißt ein primärer Propellerschub in der Rückwärtsrichtung seiner Propellerachsen und damit entgegen der Flugrichtung. Dann können mit den zu einer großen Auftriebserhöhung führenden Propellerantrieben vor den ausgefahrenen Landeklappen und etwaigen gleichsinnig nach unten ausgelenkten Querrudern besonders große primäre Propellerschübe in den Vorwärtsrichtungen ihrer Propellerachsen erzeugt werden, ohne dass der auf das Flugzeug als Ganzes einwirkende effektive Gesamtschub ungewollt groß wird.

Auch wenn im Reiseflug des Flugzeugs der effektive Gesamtschub in Flugrichtung vorwiegend mit den weiter außen liegenden Propellerantrieben erzeugt werden kann, wird im Reiseflug des Flugzeugs vorzugsweise mit allen Propellerantrieben an den beiden Halbflügeln Schub in Flugrichtung erzeugt. Besonders bevorzugt werden dann mit allen Propellerantrieben in etwa gleiche primäre Propellerschübe und/oder gleiche Beiträge zum effektiven Gesamtschub erzeugt.

Der Flügel wird vorzugsweise, wie für Flugzeuge üblich, aero-strukturell für den Reiseflug ausgelegt. Dabei wird der Einfluss der Propellerantriebe auf den Auftrieb berücksichtigt. Das erfindungsgemäße Verfahren ist auch bei unterschiedlichen Propellerantrieben anwendbar, die beispielsweise eingesetzt werden können, um den induzierten und letztlich den Gesamtwiderstand zu minimieren. Diese Möglichkeit ist insbesondere, aber nicht ausschließlich bei an den Flügelenden angeordneten Propellerantrieben gegeben. Eine weitere mögliche Anwendung der Maßnahmen des erfindungsgemäßen Verfahrens ist die Anpassung der Lastverteilung bei sich ändernder Flugzeugmasse und unveränderter Flughöhe und/oder Fluggeschwindigkeit. Mit den einzelnen Propellerantrieben an den Halbflügeln werden unterschiedliche primäre Propellerschübe erzeugt, die eine für den aktuellen Flugzustand optimale Auftriebsverteilung ergeben. Im Landeanflug werden die primären Propellerschübe geändert, um die Auftriebserzeugung zu optimieren und eine geringere Landegeschwindigkeit zu erlauben.

Bei einer Erweiterung des erfindungsgemäßen Verfahrens wird der induzierte Widerstand des Flugzeugs in bestimmten Flugsituationen durch eine Veränderung der Auftriebs- und/oder Zirkulationsverteilung über die Halbflügel gezielt erhöht. Im Landeanflug ist ein höherer Widerstand erwünscht - das Flugzeug kann somit auch mit mehr effektivem Gesamtschub sinken. Der zur Überwindung des höheren Widerstands benötigte zusätzliche effektive Gesamtschub kann dann für eine zusätzliche Auftriebserzeugung genutzt werden. Zu diesem Zweck wird eine Abweichung von der optimalen Auftriebsverteilung, die zu einem minimalen induzierten Widerstand führen würde, herbeigeführt. Im langsamen Flug mit niedrigen Fluggeschwindigkeiten, insbesondere im Landeanflug, das heißt beim Landen, besteht der Widerstand zu einem großen Teil aus dem induzierten Widerstand. Der von den Halbflügeln induzierte Widerstand hängt dabei neben der Stärke der Flügelzirkulation von der Zirkulationsverteilung ab. Durch Maßnahmen wie variierende Klappenausschläge längs der Spannweitenrichtung, kann die Zirkulationsverteilung variiert und somit der induzierte Widerstand vergrößert werden. Auf die Möglichkeit, mit den Querrudern auf die Auftriebsverteilung Einfluss zunehmen, wurde bereits hingewiesen. Erfindungsgemäß werden durch eine gezielte Variation der mit den einzelnen Propellerantrieben erzeugten primären Propellerschübe in den Vorwärtsrichtungen ihrer Propellerachsen die aerodynamischen Kräfte entlang der Halbflügel gegenüber ihrer Idealverteilung umverteilt, wodurch der induzierte Widerstand der Halbflügel erhöht wird. Grundsätzlich kann auch durch Verändern der Drehrichtung der Propeller einzelner Propellerantriebe der Auftrieb umverteilt und damit die Auftriebsverteilung negativ beeinflusst werden. Insbesondere kann durch Verändern der Drehrichtung der Propeller der Propellerantriebe negativer primärer Propellerschub erzeugt werden. Bei Nutzung von Propellerantrieben mit Verstellpropellern, d. h. mit bezüglich ihrer Anstellwinkel verstellbaren Propellerblättern, kann zudem der Drall der Propellernachläufe vom primären Propellerschub entkoppelt werden. So lässt sich bei gleichem primärem Propellerschub ein höherer Drall erzielen, der wiederum zu starker Inhomogenität der Auftriebsverteilung und letztlich zu einem erhöhten induzierten Widerstand führen kann.

Ein erhöhter induzierter Widerstand beim Landen kann auch dadurch hervorgerufen werden, dass mit den Propellerantrieben an dem einen Halbflügel andere primäre Propellerschübe in den Vorwärtsrichtungen ihrer Propellerachsen erzeugt werden als mit den mit den ihnen paarweise entsprechenden Propellerantrieben an dem anderen Halbflügel der beiden Halbflügel. Die resultierende asymmetrische Auftriebsverteilung hat den gewünschten Anstieg des induzierten Widerstands zur Folge. Dies kann zudem mit einem unterschiedlichen Ausschlag der Querruder kombiniert werden, um die Asymmetrie der Auftriebsverteilung und folglich den induzierten Widerstand zu erhöhen.

Die Beeinflussung der Auftriebsverteilung über die Tragflügel durch die mit den einzelnen Propellerantrieben erzeugten unterschiedlichen primären Propellerschübe ergeben sich zudem Vorteile im Falle eines Durchstartens während einer fehlgeschlagenen Landung des Flugzeugs. Da für den Landeanflug der induzierte Widerstand durch gezielte Einstellungen der einzelnen Propellerantriebe vergrößert wird, führt das Verändern dieser Einstellungen zwecks Erzeugung des maximalen Schubs vergleichsweise schnell zur Verbesserung der Auftriebsverteilung hinsichtlich des induzierten Widerstands und somit der aerodynamischen Effizienz.

Die erfindungsgemäße Erhöhung des induzierten Widerstands hat einen weiteren Vorteil gegenüber der Widerstandserzeugung mittels Propeller, Spreizklappen oder Bremsklappen. Da die Erhöhung des induzierten Widerstands keinen Strömungsabriss für die Widerstandsgenerierung benötigt, ist sie potentiell auch deutlich leiser. Zudem ist die Methode potentiell auch wirksamer, da der induzierte Widerstand im Langsamflug dominant ist. Allerdings schließt die erfindungsgemäße Erhöhung des induzierten Widerstands eine Kombination mit anderen Konzepten zu Widerstandsgenerierung nicht aus.

Ein erfindungsgemäßes Flugzeug mit einem zwei Halbflügel aufweisenden Tragflügel, mindestens drei an einer Flügelvorderkante jedes der Halbflügel nebeneinander angeordneten Propellerantrieben, deren Propellerachsen zumindest im Wesentlichen parallel zueinander ausgerichtet sind und deren Propellernachläufe den jeweiligen Halbflügel anblasen, einer an einer Flügelhinterkante jedes Halbflügels angeordneten Landeklappe und typischerweise auch einem an der Flügelhinterkante jedes der Halbflügel angeordneten Querruder weist eine Steuerung zur Durchführung des erfindungsgemäßen Verfahrens auf. Diese Steuerung kann Teil eines Autopiloten des Flugzeugs sein.

Bei den Propellerantrieben des erfindungsgemäßen Flugzeugs kann es sich insbesondere um elektrische Antriebe handeln. Dabei können alle Propellerantriebe an den Halbflügeln gleiche Elektromotoren und gleiche Propellerblätter aufweisen. Die Propellerblätter können bezüglich ihres Anstellwinkels einstellbar sein und mit anderen Worten können die Propellerantriebe Verstellpropeller aufweisen.

Typischerweise sind an den Tragflügeln des erfindungsgemäßen Flugzeugs keine anderen Propellerantriebe als die Propellerantriebe angeordnet, deren Propellernachläufe den jeweiligen Halbflügel anblasen. Es sind also regelmäßig nicht unterschiedliche Propeller im Sinne von Hochauftriebspropellern einerseits und Hochschubpropellern andererseits vorgesehen. Auf das Verhältnis zwischen Auftriebssteigerung und effektivem Gesamtschub wird vielmehr durch unterschiedliche primäre Propellerschübe in Flugrichtung und gegebenenfalls unterschiedlichen Drall der über die Flügelvorderkanten der Tragflügel verteilt angeordneten Propellerantriebe Einfluss genommen.

Bei dem erfindungsgemäßen Flugzeug sind an jedem der Halbflügel mindestens drei, typischerweise mindestens vier Propellerantriebe angeordnet, deren Propellernachläufe den jeweiligen Halbflügel anblasen. Oft sind es fünf oder sechs solche Propellerantriebe.

### KURZBESCHREIBUNG DER FIGUREN

Im Folgenden wird die Erfindung anhand in den Figuren dargestellter bevorzugter Ausführungsbeispiele weiter erläutert und beschrieben.

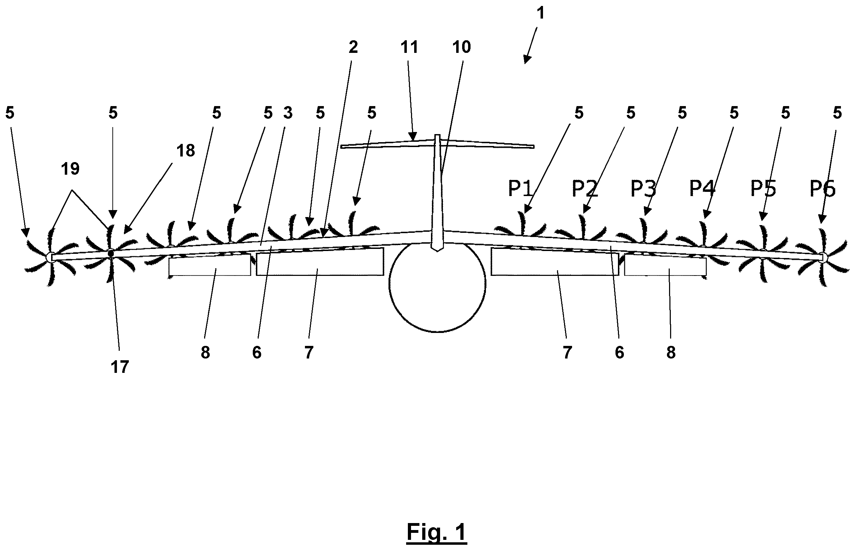

- **Fig. 1**: ist eine schematische Darstellung eines erfindungsgemäßen Flugzeugs beim Landen in einer Ansicht von hinten.

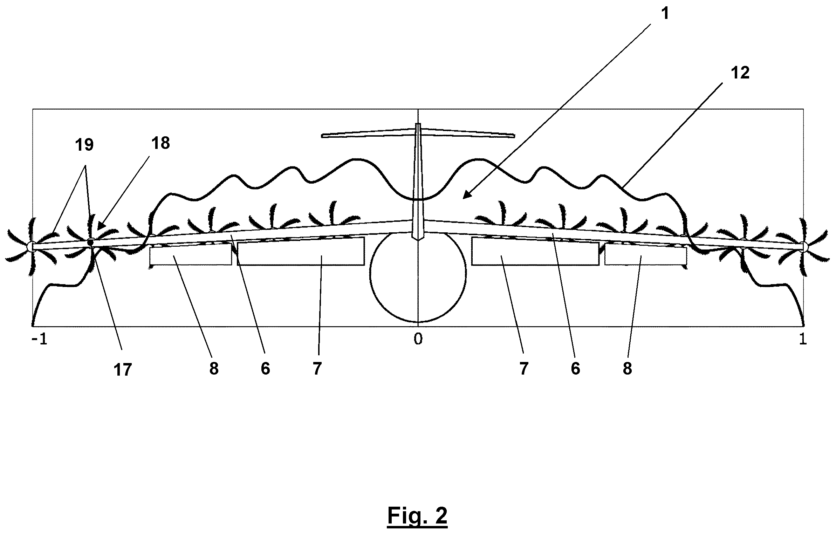

- **Fig. 2**: zeigt eine Auftriebsverteilung über das Flugzeug gemäß Fig. 1 beim Landen, wenn mit allen seinen Propellerantrieben gleiche primäre Propellerschübe in Vorwärtsrichtungen ihrer Propellerachsen erzeugt werden.

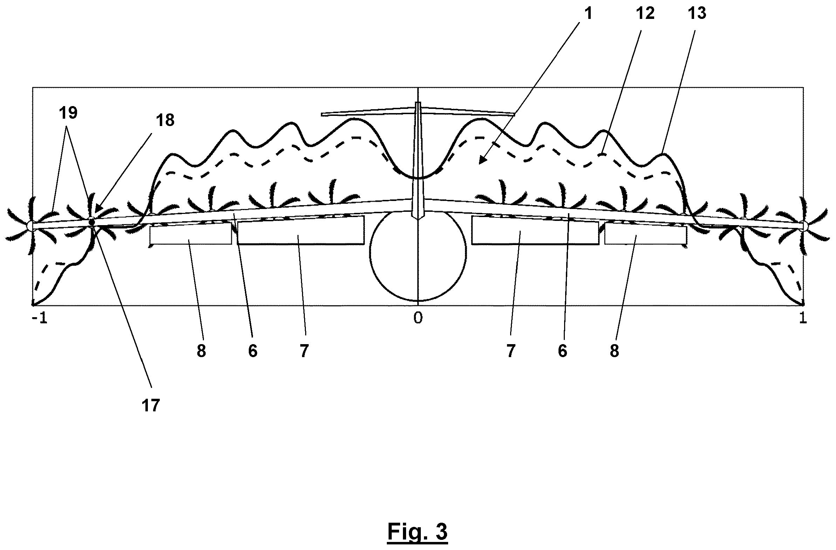

- **Fig. 3**: zeigt eine Auftriebsverteilung über das Flugzeug gemäß Fig. 1 beim Landen, wenn mit seinen Propellerantrieben im Flügelinnenbereich größere primäre Propellerschübe in den Vorwärtsrichtungen ihrer Propellerachsen erzeugt werden, während mit seinen Propellerantrieben an den Flügelenden sogar negative primäre Propellerschübe in den Vorwärtsrichtungen ihrer Propellerachsen, d. h. primäre Propellerschübe in den Rückwärtsrichtungen ihrer Propellerachsen erzeugt werden, wobei mit gestrichelter Linie die Auftriebsverteilung gemäß Fig. 2 wiedergegeben ist.

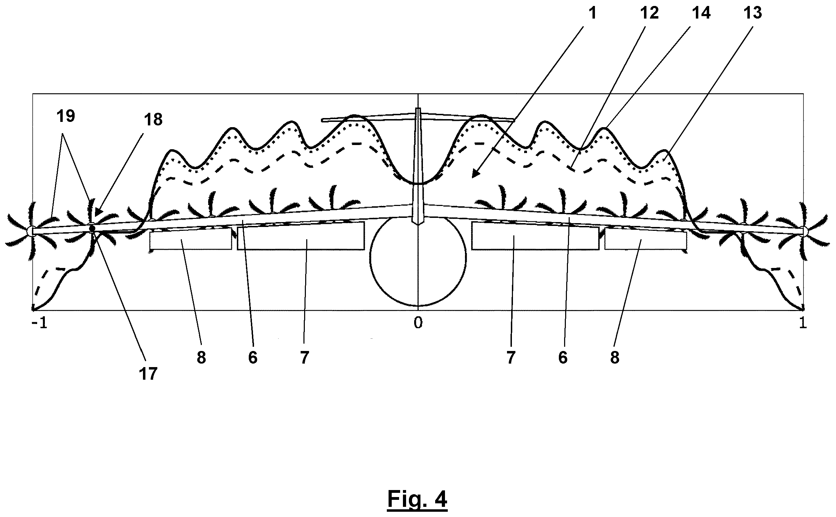

- **Fig. 4**: zeigt eine Auftriebsverteilung über das Flugzeug gemäß Fig. 1 beim Landen, wobei mit den Propellerantrieben im Flügelinnenbereich gegenüber Fig. 3 erhöhte primäre Propellerschübe in den Vorwärtsrichtungen ihrer Propellerachsen erzeugt werden, um einen erhöhten induzierten Widerstand auszugleichen, der durch die Änderung der Auftriebsverteilung gemäß Fig. 2 (hier gestrichelte Linie) zur Auftriebsverteilung gemäß Fig. 3 (hier gepunktete Linie) entsteht.

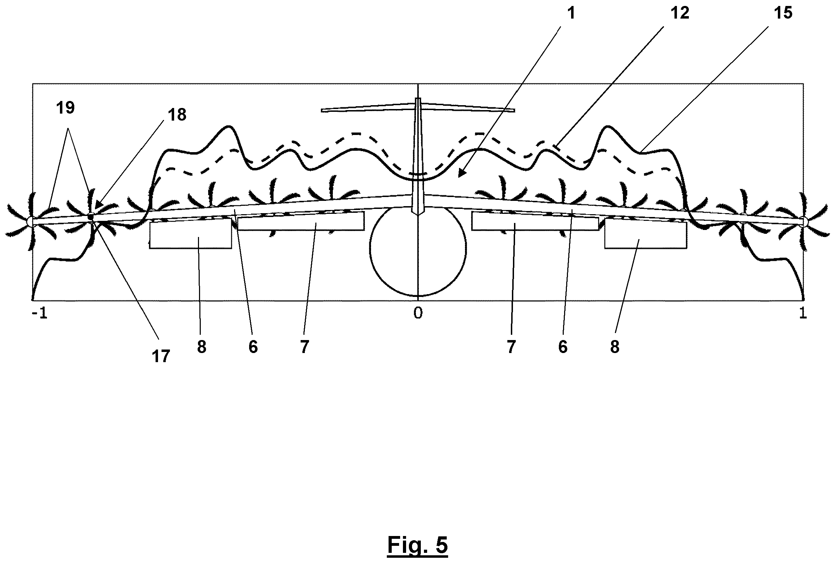

- **Fig. 5**: zeigt eine Auftriebsverteilung über das Flugzeug gemäß Fig. 1 beim Landen mit einer gegenüber Fig. 1 variierten Landeklappenstellung, wobei erneut die Auftriebsverteilung gemäß Fig. 2 zum Vergleich mit einer gestrichelten Linie wiedergegeben ist.

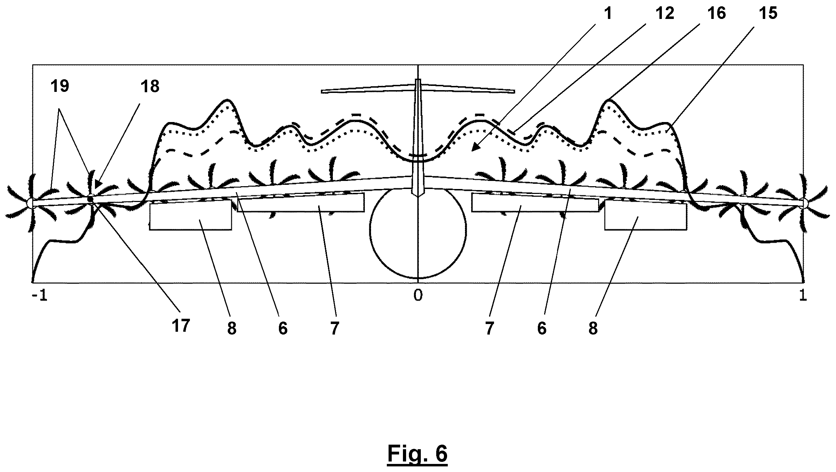

- **Fig. 6**: zeigt eine Auftriebsverteilung des erfindungsgemäßen Flugzeugs beim Landen mit gegenüber Fig. 5 im Flügelinnenbereich erhöhten primären Propellerschüben der Propellerantriebe in den Vorwärtsrichtungen ihrer Propellerachsen, um den Widerstand auszugleichen, der durch den erhöhten Klappenausschlag und der Änderung der Auftriebsverteilung gemäß Fig. 2 (hier gestrichelte Linie) zur Auftriebsverteilung gemäß Fig. 5 (hier gepunktete Linie) entsteht.

### FIGURENBESCHREIBUNG

Das in **Fig. 1** im Landeanflug von hinten dargestellte Flugzeug 1 weist einen Rumpf 9, ein Seitenleitwerk 10, ein Höhenleitwerk 11 und einen Tragflügel 2 mit zwei Halbflügeln 3 und 4 auf. Längs der dem Betrachter abgewandten Flügelvorderkanten der Halbflügel 3 und 4 sind jeweils sechs Propellerantriebe 5 gleichmäßig verteilt angeordnet. Die Propellerantriebe 5 sind dabei jeweils von einem an den Rumpf 9 anschließenden Flügelinnenbereich bis zu einem an einer Flügelspitze des Tragflügels 3 bzw. 4 endenden Flügelaußenbereich verteilt. Jeder der Propellerantriebe 5 weist einen um eine Propellerachse 17 umlaufenden Propeller 18 mit hier sechs Propellerblättern 19 auf. Propellernachläufe der Propellerantriebe 5 blasen den jeweiligen Halbflügel 3 bzw. 4 an und führen so zu einer Erhöhung des Auftriebs des jeweiligen Halbflügel 3 bzw. 4. An den dem Betrachter zugewandten Flügelhinterkanten 6 der Halbflügel 3 und 4 sind jeweils eine innere Landeklappe 7 und eine äußere Landeklappe 8 angeordnet. In Fig. 1, die das Flugzeug 1 beim Landen zeigt, sind alle Landeklappen 7 und 8 voll ausgefahren.

**Fig. 2** zeigt eine Auftriebsverteilung 12 über der Spannweite des Flugzeugs 1 beim Landen, wenn mit allen Propellerantrieben 5 gleiche primäre Propellerschübe in Vorwärtsrichtungen ihrer Propellerachsen 17, d. h. in Flugrichtung erzeugt werden. Die Komponenten des effektiven Gesamtschubs auf das Flugzeug in Anströmrichtung, d. h. in Flugrichtung, die aus den primären Propellerschüben resultieren, zuzüglich der Resultierenden der Gravitationskraft des Flugzeugs 1 in Anströmrichtung, entsprechen dabei dem aerodynamischen Widerstand des Flugzeugs 1, so dass der effektive Gesamtschubs auf das Flugzeug null ist und ein unbeschleunigter Flugzustand herrscht.

**Fig. 3** zeigt neben der hier mit gestrichelter Linie dargestellten Auftriebsverteilung 12 gemäß Fig. 2 eine Auftriebsverteilung 13 für den Fall, dass die mit den vier Propellerantrieben 5, die im Flügelinnenbereich vor den ausgefahrenen Landeklappen 7 und 8 liegen, erzeugten primären Propellerschübe in den Vorwärtsrichtungen ihrer Propellerachsen 17 erhöht werden, während mit den Propellerantrieben 5 an den Flügelspitzen der Halbflügel 3 und 4 primäre Propellerschübe in Rückwärtsrichtungen ihrer Propellerachsen 17, das heißt negative primäre Propellerschübe in den Vorwärtsrichtungen ihrer Propellerachsen 17 erzeugt werden. Die Summe der primären Propellerschübe in den Vorwärtsrichtungen ihrer Propellerachsen 17 ist dabei unverändert. Im Vergleich zur Auftriebsverteilung 12 zeigt sich jedoch eine Erhöhung des Gesamtauftriebs. Zudem ist bei der Auftriebsverteilung 13 gegenüber der Auftriebsverteilung 12 mit einem höheren induzierten Widerstand zu rechnen. Dieser erhöhte Widerstand kann durch zusätzlich erhöhte primäre Propellerschübe der Propellerantriebe im Flügelinnenbereich ausgeglichen werden. Der lokale Auftrieb im Flügelinnenbereich und somit der Gesamtauftrieb erhöht sich dadurch zusätzlich, wie die entsprechende Auftriebsverteilung 14 gemäß **Fig. 4** zeigt.

Die Auftriebsverteilung kann zudem durch spannweitig variierenden Ausschlag der Landeklappen 7 und 8 verändert werden. **Fig. 5** zeigt dies für einen Fall mit gegenüber Fig. 1 unveränderter Segmentierung der Landeklappen 7 und 8. Die inneren Landeklappen 7 sind gemäß Fig. 5 gegenüber Fig. 1 leicht eingefahren, während die äußeren Landeklappen 8 im Vergleich stärker ausgefahren sind. Nimmt man einen im Vergleich zur Auftriebsverteilung 12 gemäß Fig. 2 unveränderten Gesamtauftrieb der resultierenden Auftriebsverteilung 15 gemäß Fig. 5 an, so wirkt sich die veränderte Auftriebsverteilung 15 dennoch auf den induzierten Widerstand aus. Der erhöhte induzierte Widerstand kann durch Erhöhung der primären Propellerschübe der Propellerantriebe 5 in den Flügelinnenbereichen ausgeglichen werden, wodurch sich ein weiter erhöhter Auftrieb in den Flügelinnenbereichen einstellt, wie die resultierende Auftriebsverteilung 16 gemäß **Fig. 6** zeigt.

### BEZUGSZEICHENLISTE

- 1: Flugzeug
- 2: Tragflügel
- 3: Halbflügel
- 4: Halbflügel
- 5: Propellerantrieb
- 6: Flügelhinterkante
- 7: Landeklappe
- 8: Landeklappe
- 9: Rumpf
- 10: Seitenleitwerk
- 11: Höhenleitwerk
- 12: Auftriebsverteilung
- 13: Auftriebsverteilung
- 14: Auftriebsverteilung
- 15: Auftriebsverteilung
- 16: Auftriebsverteilung
- 17: Propellerachse
- 18: Propeller
- 19: Propellerblatt

## Patentansprüche

1. Verfahren zum Fliegen eines Flugzeugs (1) mit einem zwei Halbflügel (3, 4) aufweisenden Tragflügel (2), mindestens drei an einer Flügelvorderkante jedes der Halbflügel (3, 4) nebeneinander angeordneten Propellerantrieben (5), deren Propeller (18) um Propellerachsen (17) umlaufen und deren Propellernachläufe den jeweiligen Halbflügel (3, 4) anblasen, und einer an einer Flügelhinterkante (6) jedes der Halbflügel (3, 4) angeordneten Landeklappe (7, 8),
- wobei in bestimmten Flugzuständen mit den mindestens drei Propellerantrieben (5) an dem jeweiligen Halbflügel (3, 4) unterschiedliche primäre Propellerschübe in Vorwärtsrichtungen ihrer Propellerachsen (17) erzeugt werden und
- wobei die Landeklappen (7, 8) beim Landen des Flugzeugs (1) ausgefahren werden, wobei beim Landen mit mindestens einem der Propellerantriebe (5) der an dem jeweiligen Halbflügel (3, 4) vor der ausgefahrenen Landeklappe (7, 8) angeordnet ist, ein um mindestens 15 % größerer primärer Propellerschub in Vorwärtsrichtung seiner Propellerachse (17) erzeugt wird als mit mindestens einem der Propellerantriebe (5), der an dem jeweiligen Halbflügel (3, 4) nicht vor der ausgefahrenen Landeklappe (7, 8) angeordnet ist.

2. Verfahren nach Anspruch 1, wobei beim Landen mit einem der Propellerantriebe (5), der an dem jeweiligen Halbflügel (3, 4) vor der ausgefahrenen Landeklappe (7, 8) weiter innen angeordnet ist, ein um mindestens 10 % größerer primärer Propellerschub in Vorwärtsrichtung seiner Propellerachse (17) erzeugt wird als mit einem der Propellerantriebe (5), der an dem jeweiligen Halbflügel (3, 4) vor der ausgefahrenen Landeklappe (7, 8) weiter außen angeordnet ist.

3. Verfahren nach Anspruch 1 oder 2, wobei das Flugzeug (1) an jedem der beiden Halbflügel (3, 4) ein Querruder aufweist, wobei die beiden Querruder an den beiden Halbflügeln (3, 4) beim Landen gleichsinnig ausgelenkt werden und beim Landen mit mindestens einem der Propellerantriebe (5), der an dem jeweiligen Halbflügel (3, 4) vor dem ausgelenkten Querruder angeordnet ist, ein um mindestens 10 % größerer primärer Propellerschub in Vorwärtsrichtung seiner Propellerachse (17) erzeugt wird als mit mindestens einem der Propellerantriebe (5), der an dem jeweiligen Halbflügel (3, 4) weder vor dem ausgelenkten Querruder, noch vor der ausgefahrenen Landeklappe (7, 8) angeordnet ist.

4. Verfahren nach einem der vorhergehenden Ansprüche, wobei beim Landen mit allen vor den ausgefahrenen Landeklappen (7, 8) oder ausgelenkten Querrudern angeordneten Propellerantrieben (5) um mindestens 15 % größere primäre Propellerschübe in den Vorwärtsrichtungen ihrer Propellerachsen (17) erzeugt werden als mit allen nicht vor den ausgefahrenen Landeklappen (7, 8) oder den ausgelenkten Querrudern angeordneten Propellerantrieben (5).

5. Verfahren nach einem der vorhergehenden Ansprüche, wobei beim Landen diejenigen der Propellerantriebe (5), mit denen größere primäre Propellerschübe in den Vorwärtsrichtungen ihrer Propellerachsen (17) erzeugt werden, mit größeren, gleich großen oder kleineren Antriebsleistung betrieben werden als/wie diejenigen der Propellerantriebe (5), mit denen kleinere primäre Propellerschübe in den Vorwärtsrichtungen ihrer Propellerachsen (17) erzeugt werden.

6. Verfahren nach einem der vorhergehenden Ansprüche, wobei beim Landen mit mindestens einem der Propellerantriebe (5) an jedem Halbflügel (3, 4), der nicht vor den ausgefahrenen Landeklappen (7, 8) an dem jeweiligen Halbflügel (3, 4) angeordnet ist, Primärschub in Rückwärtsrichtung seiner Propellerachse (17) erzeugt wird.

7. Verfahren nach einem der vorhergehenden Ansprüche, wobei beim Landen mit den Propellerantrieben (5) an dem einen Halbflügel (3) andere primäre Propellerschübe in den Vorwärtsrichtungen ihrer Propellerachsen (17) erzeugt werden als mit den ihnen paarweise entsprechenden Propellerantrieben (5) an dem anderen Halbflügel (4) der beiden Halbflügel (3, 4).

8. Verfahren nach einem der vorhergehenden Ansprüche, wobei im Reiseflug des Flugzeugs (1) mit allen Propellerantrieben (5) an den beiden Halbflügeln (3, 4) Propellerschübe in den Vorwärtsrichtungen ihrer Propellerachsen (17) erzeugt werden.

9. Flugzeug (1) mit
- einem zwei Halbflügel (3, 4) aufweisenden Tragflügel (2),
- mindestens drei an einer Flügelvorderkante jedes der Halbflügel (3, 4) nebeneinander angeordneten Propellerantrieben (5), deren Propeller (18) um Propellerachsen (17) umlaufen und deren Propellernachläufe den jeweiligen Halbflügel (3, 4) anblasen,
- einer an einer Flügelhinterkante (6) jedes Halbflügels (3, 4) angeordneten Landeklappe (7, 8) und
- einer Steuerung zur Durchführung des Verfahrens nach einem der vorhergehenden Ansprüche.

10. Flugzeug (1) nach Anspruch 9, wobei an der Flügelhinterkante (6) jedes der Halbflügel (3, 4) ein Querruder angeordnet ist.

11. Flugzeug (1) nach Anspruch 9 oder 10, wobei alle Propellerantriebe (5) an den Halbflügeln (3, 4) gleiche oder zueinander spiegelsymmetrische Elektromotoren und gleiche oder zueinander spiegelsymmetrische Propellerblätter (19) aufweisen.

12. Flugzeug (1) nach einem der Ansprüche 9 bis 11, wobei die Propellernachläufe aller an den Tragflügeln (2) angeordneten Propellerantriebe (5) den jeweiligen Halbflügel (3, 4) anblasen.

13. Flugzeug (1) nach einem der Ansprüche 9 bis 12, wobei an jedem der Halbflügel (3, 4) mindestens 4, vorzugsweise mindestens 5 Propellerantriebe (5) angeordnet sind, deren Propellernachläufe den jeweiligen Halbflügel (3, 4) anblasen.

14. Flugzeug (1) nach einem der Ansprüche 9 bis 13, wobei zumindest ein Propellerantrieb (5) an jedem der Halbflügel (3, 4) einen Verstellpropeller mit verstellbaren Propellerblättern (19) aufweist.

## Claims

1. Method of flying an aircraft (1) comprising a wing (2) having two half wings (3, 4), at least three propeller drives (5) arranged next to one another at a leading edge of each of the half wings (3, 4), the propellers (18) of which rotate about propeller axes (17) and the propeller wakes of which blow against the respective half wing (3, 4), and a landing flap (7, 8) arranged at a trailing edge (6) of each of the half wings (3, 4),
- the at least three propeller drives (5) at the respective half-wing (3, 4) generating different primary propeller thrusts in the forward directions of their propeller axes (17) in certain flight states, and
- the landing flaps (7, 8) being extended when the aircraft (1) lands,
wherein, during landing, a primary propeller thrust in the forward direction of its propeller axis (17) is generated with at least one of the propeller drives (5) arranged at the respective half-wing (3, 4) in front of the extended landing flap (7, 8), which is at least 15 % greater than generated with at least one of the propeller drives (5) arranged at the respective half-wing (3, 4) not in front of the extended landing flap (7, 8).

2. Method according to claim 1, wherein, during landing, a primary propeller thrust in the forward direction of its propeller axis (17) is generated with one of the propeller drives (5) arranged further inwards at the respective half-wing (3, 4) in front of the extended landing flap (7, 8), which is at least 10 % greater than generated with one of the propeller drives (5) arranged further outwards at the respective half-wing (3, 4) in front of the extended landing flap (7, 8).

3. Method according to claim 1 or 2, wherein the aircraft (1) has an aileron at each of the two half wings (3, 4), wherein the two ailerons at the two half wings (3, 4) are deflected in the same direction during landing, and, during landing, a primary propeller thrust in the forward direction of its propeller axis (17) is generated with at least one of the propeller drives (5) arranged at the respective half wing (3, 4) in front of the deflected aileron, which is at least 10 % greater than generated with at least one of the propeller drives (5) arranged at the respective half-wing (3, 4) neither in front of the deflected aileron nor in front of the extended landing flap (7, 8).

4. Method according to any of the preceding claims, wherein, during landing, with all propeller drives (5) arranged in front of the extended landing flaps (7, 8) or deflected ailerons, primary propeller thrusts in the forward directions of their propeller axes (17) are generated which are at least 15 % greater than generated with all propeller drives (5) not arranged in front of the extended landing flaps (7, 8) or the deflected ailerons.

5. Method according to any of the preceding claims, wherein, during landing, those of the propeller drives (5) with which larger primary propeller thrusts are generated in the forward directions of their propeller axes (17) are operated with larger, equally large or smaller propulsion powers than/as those of the propeller drives (5) with which smaller primary propeller thrusts are generated in the forward directions of their propeller axes (17).

6. Method according to any of the preceding claims, wherein, during landing, primary thrust in the rearward direction of its propeller axis (17) is generated with at least one of the propeller drives (5) at each half-wing (3, 4), which is not arranged in front of the extended landing flaps (7, 8) at the respective half-wing (3, 4).

7. Method according to any of the preceding claims, wherein, during landing, different primary propeller thrusts are generated in the forward directions of their propeller axes (17) with the propeller drives (5) at the one half-wing (3), than generated with the propeller drives (5) corresponding to them in pairs at the other half-wing (4) of the two half-wings (3, 4).

8. Method according to any of the preceding claims, wherein, in cruise flight of the aircraft (1), propeller thrusts in the forward directions of their propeller axes (17) are generated with all propeller drives (5) at the two half wings (3, 4).

9. Aircraft (1) comprising
- a wing (2) having two half wings (3, 4),
- at least three propeller drives (5) arranged next to one another at a leading edge of each of the half wings (3, 4), the propellers (18) of which rotate about propeller axes (17) and the propeller wakes of which blow against the respective half wing (3, 4),
- a landing flap (7, 8) arranged on a trailing edge (6) of each half wing (3, 4) and
- a controller for carrying out the method according to any of the preceding claims.

10. Aircraft (1) according to claim 9, wherein an aileron is arranged at the trailing edge (6) of each of the half wings (3, 4).

11. Aircraft (1) according to claim 9 or 10, wherein all propeller drives (5) at the half wings (3, 4) have equal or mutually mirror-symmetrical electric motors and equal or mutually mirror-symmetrical propeller blades (19).

12. Aircraft (1) according to any of claims 9 to 11, wherein the propeller wakes of all propeller drives (5) arranged at the wing (2) blow against the respective half wing (3, 4).

13. Aircraft (1) according to any of claims 9 to 12, wherein at least 4, preferably at least 5 propeller drives (5) are arranged at each of the half wings (3, 4), the propeller wakes of which blow against the respective half wing (3, 4).

14. Aircraft (1) according to any of claims 9 to 13, wherein at least one propeller drive (5) at each of the half wings (3, 4) has a controllable pitch propeller with adjustable propeller blades (19).

## Revendications

1. Procédé pour faire voler un aéronef (1) avec une aile portante (2) présentant deux demi-ailes (3, 4), au moins trois entraînements d'hélice (5) agencés côte à côte sur un bord d'attaque de chacune des demi-ailes (3, 4), dont les hélices (18) tournent autour d'axes d'hélice (17) et dont les sillages d'hélices soufflent sur la demi-aile respective (3, 4), et un volet d'atterrissage (7, 8) agencé sur un bord arrière (6) de chacune des demi-ailes (3, 4)
- dans lequel, dans certains états de vol, les au moins trois entraînements d'hélice (5) sur la demi-aile respective (3, 4) produisent des poussées primaires différentes dans les directions avant de leurs axes d'hélice (17) et
- les volets d'atterrissage (7, 8) sont déployés lors de l'atterrissage de l'aéronef (1),
dans lequel, lors de l'atterrissage avec au moins l'un des entraînements d'hélice (5), celui qui est agencé sur la demi-aile respective (3, 4) devant le volet d'atterrissage déployé (7, 8) produit une poussée primaire de l'hélice dans la direction avant de son axe d'hélice (17) supérieure d'au moins 15 % à celle produite avec au moins l'un des entraînements d'hélice (5) qui n'est pas agencé sur la demi-aile respective (3, 4) devant le volet d'atterrissage déployé (7, 8).

2. Procédé selon la revendication 1 dans lequel, lors de l'atterrissage avec l'un des entraînements d'hélice (5), celui qui est agencé plus à l'intérieur sur la demi-aile respective (3, 4) avant le volet d'atterrissage déployé (7, 8) produit une poussée primaire de l'hélice supérieure d'au moins 10 % dans la direction avant de son axe d'hélice (17) par rapport à celle produite avec l'un des entraînements d'hélice (5) qui est agencé plus à l'extérieur sur la demi-aile respective (3, 4) devant le volet d'atterrissage déployé (7, 8).

3. Procédé selon la revendication 1 ou 2, dans lequel l'aéronef (1) présente un aileron sur chacune des deux demi-ailes (3, 4), les deux ailerons sur les deux demi-ailes (3, 4) étant déviés dans le même sens lors de l'atterrissage et dans lequel, lors de l'atterrissage avec au moins l'un des entraînements d'hélice (5), celui qui est agencé sur la demi-aile respective (3, 4) devant l'aileron dévié, produit une poussée primaire de l'hélice supérieure d'au moins 10 % dans la direction avant de son axe d'hélice (17) par rapport à celle produite avec au moins l'un des entraînements d'hélice (5) qui n'est agencé ni devant le déviateur dévié, ni devant le volet d'atterrissage déployé (7, 8) sur la demi-aile respective (3, 4).

4. Procédé selon l'une des revendications précédentes, dans lequel, lors de l'atterrissage avec tous les entraînements d'hélice (5) agencés devant les volets d'atterrissage déployés (7, 8) ou les ailerons déviés, des poussées primaires des hélices supérieures d'au moins 15 % dans les directions avant de leurs axes d'hélice (17) sont produites par rapport à celles produites avec tous les entraînements d'hélice (5) non agencés devant les volets d'atterrissage déployés (7, 8) ou les ailerons déviés.

5. Procédé selon l'une des revendications précédentes, dans lequel, lors de l'atterrissage, les entraînements d'hélice (5) qui produisent des poussées primaires plus importantes dans les directions avant de leurs axes d'hélice (17) sont actionnés avec une puissance d'entraînement supérieure, égale ou inférieure à celle des entraînements d'hélice (5) qui produisent des poussées primaires plus faibles dans les directions avant de leurs axes d'hélice (17).

6. Procédé selon l'une des revendications précédentes dans lequel, lors de l'atterrissage, au moins l'un des entraînements d'hélice (5) sur chaque demi-aile (3, 4) qui n'est pas agencé devant les volets d'atterrissage déployés (7, 8) sur la demi-aile respective (3, 4) produit une poussée primaire dans la direction arrière de son axe d'hélice (17).

7. Procédé selon l'une des revendications précédentes dans lequel, lors de l'atterrissage avec les entraînements d'hélice (5) sur l'une des demi-ailes (3), d'autres poussées primaires des hélices sont produites dans les directions avant de leurs axes d'hélices (17) que celles produites avec les entraînements d'hélice (5) qui leur sont appariés sur l'autre demi-aile (4) des deux demi-ailes (3, 4).

8. Procédé selon l'une des revendications précédentes dans lequel, en vol de croisière de l'aéronef (1) avec tous les entraînements d'hélice (5) sur les deux demi-ailes (3, 4), des poussées d'hélices sont produites dans les directions avant de leurs axes d'hélices (17).

9. Aéronef (1) avec
- une aile portante (2) présentant deux demi-ailes (3, 4),
- au moins trois entraînements d'hélice (5) agencés côte à côte sur un bord d'attaque de chacune des demi-ailes (3, 4), dont les hélices (18) tournent autour d'axes d'hélice (17) et dont les sillage d'hélice soufflent sur la demi-aile respective (3, 4),
- un volet d'atterrissage (7, 8) agencé sur un bord arrière (6) de chaque demi-aile (3, 4) et
- une commande pour la mise en œuvre du procédé selon l'une des revendications précédentes.

10. Aéronef (1) selon la revendication 9, dans lequel un aileron est agencé sur le bord arrière (6) de chacune des demi-ailes (3, 4).

11. Aéronef (1) selon la revendication 9 ou 10, tous les entraînements d'hélice (5) sur les demi-ailes (3, 4) présentant des moteurs électriques identiques ou symétriques l'un par rapport à l'autre et des pales d'hélices (19) identiques ou symétriques l'une par rapport à l'autre.

12. Aéronef (1) selon l'une des revendications 9 à 11, dans lequel les sillages de toutes les hélices (5) agencées sur les ailes portantes (2) soufflent sur la demi-aile respective (3, 4).

13. Aéronef (1) selon l'une des revendications 9 à 12, dans lequel au moins 4, de préférence au moins 5 entraînements d'hélice (5) sont agencés sur chacune des demi-ailes (3, 4), dont les sillages des hélices soufflent sur la demi-aile respective (3, 4).

14. Aéronef (1) selon l'une des revendications 9 à 13, dans lequel au moins un entraînement d'hélice (5) sur chacune des demi-ailes (3, 4) comprend une hélice à pas variable avec des pales d'hélice réglables (19).
